# EUROPÄISCHE PATENTSCHRIFT

(11) **EP 4 189 316 B1**
(45) Veröffentlichungstag und Bekanntmachung des Hinweises auf die Patenterteilung: **31.07.2024**
(21) Anmeldenummer: 21739060.8
(22) Anmeldetag: 30.06.2021
(51) Int. Cl.: F28D 21/00, F28F 9/02

(54) **WÄRMEÜBERTRAGER FÜR EINE VERBRENNUNGSKRAFTMASCHINE MIT EINEM VERSTEIFUNGSELEMENT AN EINEM FÜGEBEREICH ZWEIER TRENNWÄNDE UND VERBRENNUNGSKRAFTMASCHINE MIT EINEM WÄRMEÜBERTRAGER**
HEAT EXCHANGER FOR AN INTERNAL COMBUSTION ENGINE, HAVING A STIFFENING ELEMENT IN THE REGION OF A JOIN BETWEEN TWO PARTITIONS, AND INTERNAL COMBUSTION ENGINE HAVING A HEAT EXCHANGER
ÉCHANGEUR THERMIQUE POUR UN MOTEUR À COMBUSTION INTERNE, AYANT UN ÉLÉMENT DE RIGIDIFICATION DANS LA RÉGION D'UNE JONCTION ENTRE DEUX CLOISONS, ET MOTEUR À COMBUSTION INTERNE DOTÉ D'UN ÉCHANGEUR THERMIQUE

(30) Priorität: 31.07.2020 DE 102020120332
(43) Veröffentlichungstag der Anmeldung: 07.06.2023
(73) Patentinhaber: Bayerische Motoren Werke Aktiengesellschaft, 80809 München (DE)
(72) Erfinder: ZHANG, Oliver Bichi, 80939 München (DE)
(86) Internationale Anmeldenummer: PCT/EP2021/068005
(87) Internationale Veröffentlichungsnummer: WO 2022/022934

(56) Entgegenhaltungen:
- EP-A1- 3 150 950
- EP-A1- 3 270 085
- US-A1- 2006 219 394
- US-A1- 2010 044 019

## Beschreibung

Die Erfindung betrifft einen Wärmeübertrager für eine Verbrennungskraftmaschine, zum Übertragen von Wärme zwischen zumindest zwei Fluiden, gemäß dem Oberbegriff von Patentanspruch 1. Ein weiterer Aspekt der Erfindung betrifft eine Verbrennungskraftmaschine mit einem Wärmeübertrager.

Derartige Wärmeübertrager, auch Wärmetauscher genannt, dienen zur Übertragung von Wärme zwischen Fluiden. Zur Kühlung von Motoröl einer Verbrennungskraftmaschine ist beispielsweise der Einsatz sogenannter Öl-Kühlmittel-Wärmeübertrager üblich. Beim Kaltstart der Verbrennungskraftmaschine können diese Öl-Kühlmittel-Wärmeübertrager auch zum Erwärmen des Motoröls herangezogen und dadurch der sogenannte Warmlauf der Verbrennungskraftmaschine beschleunigt werden. Wärmeübertrager für Verbrennungskraftmaschinen können auch unmittelbar zu einem rohemissionsarmen Betrieb der Verbrennungskraftmaschine beitragen. Ein Beispiel hierfür stellt die gekühlte Abgasrückführung, auch als AGR abgekürzt, dar, bei welcher eine Teilmenge eines beim Betrieb der Verbrennungskraftmaschine emittierten Abgases aus einem Abgastrakt der Verbrennungskraftmaschine entnommen, mittels eines als AGR-Kühler ausgebildeten Wärmeübertragers gekühlt und anschließend einem Ansaugtrakt der Verbrennungskraftmaschine zugeführt wird. Diese gekühlte Teilmenge des Abgases gelangt anschließend in jeweilige Brennräume der Verbrennungskraftmaschine und dient als sogenanntes Ballastgas bei der Verbrennung eines Luft-Kraftstoff-Gemisches, wodurch NOx-Rohemissionen signifikant reduziert werden können.

Aus der DE 10 2016 210 261 A1 ist ein Wärmetauscher zum Austausch von Wärme zwischen einem ersten Fluid und einem zweiten Fluid bekannt, wobei der Wärmetauscher für das erste Fluid von einer ersten Stirnseite zu einer zweiten Stirnseite durchströmbar ist. Der Wärmetauscher weist mindestens zwei Trennbleche auf, die für das erste Fluid und das zweite Fluid voneinander getrennte Strömungsbereiche innerhalb des Wärmetauschers voneinander abgrenzen. Mindestens zwei benachbarte Trennbleche haben an zumindest einer der Stirnseiten des Wärmetauschers jeweils einen Verbindungsbereich, in welchem diese über eine Verbindung miteinander verbunden sind. Die Verbindung weist stirnseitig mindestens eine Ausnehmung auf.

Die EP 3 150 950 A1 offenbart einen AGR-Kühler. Der AGR-Kühler umfasst einen beschichteten Rohrkern, der durch Beschichten mehrerer Gaskanäle nebeneinander gebildet wird, wobei in die Gaskanäle eine Rippenstruktur zur Verbesserung der Wärmeübertragung eingesetzt ist und die gegenüberliegenden Enden der Gaskanäle offen sind.

Aufgabe der vorliegenden Erfindung ist es, einen Wärmeübertrager sowie eine Verbrennungskraftmaschine der eingangs genannten Art zu schaffen, welche eine besonders ausfallsichere Wärmeübertragung zwischen Fluiden ermöglichen.

Diese Aufgabe wird durch einen Wärmeübertrager mit den Merkmalen des Patentanspruchs 1 sowie durch eine Verbrennungskraftmaschine mit den Merkmalen des Patentanspruchs 9 gelöst. Vorteilhafte Ausgestaltungen mit zweckmäßigen Weiterbildungen der Erfindung sind in den Unteransprüchen angegeben.

Ein erster Aspekt der Erfindung betrifft einen Wärmeübertrager für eine Verbrennungskraftmaschine, zum Übertragen von Wärme zwischen zumindest zwei Fluiden,
- mit wenigstens einem Gehäuse, welches zumindest eine Gehäusewandung und einen zumindest bereichsweise mittels der Gehäusewandung begrenzten Gehäuseinnenraum aufweist, welcher einen Fluideintrittsbereich zum Einleiten eines ersten Fluides der zumindest zwei Fluide in den Gehäuseinnenraum und einen Fluidaustrittsbereich zum Ausleiten des ersten Fluides aus dem Gehäuseinnenraum aufweist,
- mit mindestens zwei Trennwänden, welche zumindest überwiegend in dem Gehäuseinnenraum aufgenommen und an zumindest einem Verbindungsbereich mit der Gehäusewandung des Gehäuses verbunden sind, und welche zur Trennung der Fluide voneinander einen mittels eines zweiten Fluids der wenigstens zwei Fluide durchströmbaren Fluidaufnahmeraum zumindest bereichsweise begrenzen, wobei die mindestens zwei Trennwände zumindest an einem, dem Fluideintrittsbereich zugeordneten und in einer Fluidhauptströmungsrichtung des ersten Fluides an den Fluidaufnahmeraum angrenzenden Fügebereich miteinander verbunden sind.

Bei den Fluiden kann es sich beispielsweise um Abgas und Kühlmittel, insbesondere Kühlwasser handeln. Das erste Fluid kann beispielsweise als Abgas ausgebildet sein, wohingegen das zweite Fluid als Kühlmittel ausgebildet sein kann. Der Fluidaustrittsbereich kann dem Fluideintrittsbereich in der Fluidhauptströmungsrichtung des ersten Fluides gegenüber liegen. Unter dem Ausdruck Fluidhauptströmungsrichtung ist die Strömungsrichtung des ersten Fluides zu verstehen, in welcher das erste Fluid beim bestimmungsgemäßen Gebrauch des Wärmeübertragers überwiegend strömen kann.

Beim bestimmungsgemäßen Gebrauch des Wärmeübertragers tritt das erste Fluid an dem Fluideintrittsbereich in den Gehäuseinnenraum ein und an dem Fluidaustrittsbereich aus dem Gehäuseinnenraum aus. Darüber hinaus ist das zweite Fluid beim bestimmungsgemäßen Gebrauch des Wärmeübertragers in dem Fluidaufnahmeraum geführt und damit aufgenommen. Um möglichst hohe Wärmeübergangskoeffizienten zu erzielen, ist es besonders vorteilhaft, die Fluide unter Ausbildung einer jeweiligen turbulenten Strömung sowohl des ersten Fluides, als auch des zweiten Fluides durch den Wärmeübertrager zu führen. Zwischen dem Fluideintrittsbereich und dem Fluidaustrittsbereich kann dann eine effiziente Wärmeübertragung zwischen dem ersten Fluid und dem in dem Fluidaufnahmeraum geführten zweiten Fluid durch die jeweiligen Trennwände hindurch erfolgen.

Die Fluidhauptströmungsrichtung kann in Längserstreckungsrichtung des Wärmeübertragers orientiert sein. Damit kann also der Fluidaustrittsbereich dem Fluideintrittsbereich in Längserstreckungsrichtung des Wärmeübertragers gegenüberliegen. Der Fluidaufnahmeraum kann sich zwischen den mindestens zwei Trennwänden erstrecken, wodurch das in dem Fluidaufnahmeraum führbare zweite Fluid wirksam und zuverlässig von dem ersten Fluid getrennt gehalten werden kann. Die Wärmeübertragung zwischen den beiden Fluiden kann insbesondere durch Wärmeleitung durch die jeweiligen Trennwände erfolgen. Insbesondere kann das erste Fluid aneinander senkrecht zur Fluidhauptströmungsrichtung (des ersten Fluids) gegenüberliegenden Fluidaufnahmeraum-Seiten, also beispielsweise in Blickrichtung entlang der Fluidhauptströmungsrichtung links und rechts des Fluidaufnahmeraumes, entlang strömen und dabei Wärme über die jeweiligen Trennwände mit dem in dem Aufnahmeraum geführten, zweiten Fluid austauschen. Unter dem Ausdruck, wonach die mindestens zwei Trennwände den Fluidaufnahmeraum zumindest bereichsweise begrenzen ist zu verstehen, dass der Fluidaufnahmeraum nicht ausschließlich anhand der Trennwände, sondern beispielsweise auch bereichsweise durch die Gehäusewandung begrenzt sein kann.

Unter dem Zuordnen des Fügebereichs zu dem Fluideintrittsbereich kann verstanden werden, dass der Fügebereichs sich zumindest in der Nähe des Fluideintrittsbereich befinden kann, also beispielsweise dem Fluideintrittsbereich zugewandt sein kann und zusätzlich oder alternativ in dem Fluideintrittsbereich angeordnet sein kann.

Zudem ist vorgesehen, dass der Wärmeübertrager wenigstens ein Versteifungselement umfasst, welches zur zumindest bereichsweisen Versteifung zumindest eines an den Verbindungsbereich angrenzenden Versteifungsabschnitts des Fügebereichs an dem Fügebereich angeordnet und dazu ausgebildet ist, den Versteifungsabschnitt bei einer temperaturbedingten Längenänderung des Fügebereichs zumindest gegenüber einer längenänderungsbedingten Knickbelastung abzustützen.

Dies ist von Vorteil, da hierdurch eine Entlastung des Verbindungsbereichs erzielt werden kann. Durch das Abstützen der Knickbelastung kann insbesondere ein seitliches Ausknicken, beispielsweise in Form einer beulenartigen Deformation, in dem Versteifungsabschnitt vermieden werden. Zur Verdeutlichung: Eine zumindest ansatzweise vergleichbare beulenartige Verformung ist beispielsweise von einem Euler'schen Knickstab bekannt, bei welchem der Knickstab an dessen beiden Stabenden gelagert ist.

Der Versteifungsabschnitt kann besonders bevorzugt unmittelbar an den Verbindungsbereich angrenzen. Damit kann das den Versteifungsabschnitt gegenüber der Knickbelastung abstützende Versteifungselement längenänderungsbedingte, mechanische Spannungen am Verbindungsbereich erheblich reduzieren, wodurch allenfalls eine geringfügige und damit unschädliche mechanische Belastung des Verbindungsbereichs auftritt.

Kommt es also beim Betrieb des Wärmeübertragers zur temperaturbedingten Längenänderung des Fügebereichs, indem das erste Fluid mit einer besonders hohen Fluidtemperatur und/oder unter hoch transienter Fluidströmungsgeschwindigkeit des ersten Fluides am Fluideintrittsbereich auf den Fügebereich auftrifft und den Fügebereich dadurch stark erwärmt, so kann anhand des Versteifungselements verhindert werden, dass es infolge der Längenänderung zum Ausknicken des Versteifungsabschnitts kommt.

Insbesondere kann selbst bei hohen Fluidtemperaturen des ersten Fluides bei dessen Auftreffen auf den Fügebereich ein Entstehen von etwaigen Spannungsrissen an dem Verbindungsbereich und damit einhergehende Undichtheiten vermieden werden, wodurch dauerhaft eine besonders ausfallsichere Wärmeübertragung zwischen den Fluiden ermöglicht ist.

An den wenigstens einen Fügebereich in Fluidhauptströmungsrichtung angrenzende Bereiche der mindestens zwei Trennwände können frei von dem wenigstens einen Versteifungselement sein. Mit anderen Worten kann es vorgesehen sein, dass sich das Versteifungselement ausschließlich zumindest bereichsweise über den Fügebereich erstreckt, was nicht ausschließt, dass weitere Fügebereiche, beispielsweise ein zweiter Fügebereich, welcher in Fluidhauptströmungsrichtung von dem Fügebereich beabstandet sein kann und beispielsweise dem Fluidaustrittsbereich zugeordnet sein kann, nicht ebenfalls eine derartiges Versteifungselement, nämlich ein zweites Versteifungselement aufweisen kann.

Das Versteifungselement kann grundsätzlich als Blechteil ausgebildet sein, wodurch das Versteifungselement einfach hergestellt und mitunter platzsparend an dem Versteifungsabschnitt angeordnet sein kann.

Gemäß der Erfindung umgreift das Versteifungselement die mindestens zwei Trennwände an dem Versteifungsabschnitt zumindest bereichsweise. Dies ist von Vorteil, da durch das bereichsweise Umgreifen eine besonders sichere Abstützung der Knickbelastung gegeben ist, zumal dann das Ausknicken zu einander entgegengesetzten Seiten hin wirksam unterbunden werden kann.

Der Erfindung liegt die Erkenntnis zugrunde, dass der Verbindungsbereich, an welchem die Trennwände zumindest mittelbar, bevorzugt unmittelbar, mit der Gehäusewandung verbunden sind, besonders anfällig für Schäden infolge thermischer Spannungen ist. Dementsprechend wurde erkannt, dass das Auftreffen des ersten Fluides, insbesondere mit hoch transienten Fluidströmungsgeschwindigkeitsänderungen, und mit hoher Fluidtemperatur des ersten Fluides auf den Fügebereich und die damit verbundene temperaturbedingte Längenänderung des Fügebereichs zur Schädigung des Verbindungsbereichs führen kann. Die Erfindung setzt hier an, da durch das Versteifungselement eine insbesondere lokal begrenzte und damit gezielte Versteifung geschaffen ist, an welcher das unerwünschte Ausknicken infolge der temperaturbedingten Längenänderung gezielt unterbunden werden kann.

In einer weiteren vorteilhaften Weiterbildung der Erfindung klemmt das Versteifungselement die mindestens zwei Trennwände an dem Versteifungsabschnitt ein. Dies ist von Vorteil, da durch das Einklemmen ein besonders eng anliegender Sitz des Versteifungselements an den Trennwänden gegeben ist. Dadurch kann das Versteifungselement besonders verliersicher an den Trennwänden montiert und gegebenenfalls zusätzlich anschließend stoffschlüssig mit den Trennwänden verbunden, beispielsweise verlötet werden. Das Versteifungselement kann insbesondere ein Untermaß aufweisen, sodass das Versteifungselement in dessen Anordnung an dem Versteifungsabschnitt mit den zwei Trennwänden verspannt sein kann.

In einer weiteren vorteilhaften Weiterbildung der Erfindung umfasst der Fügebereich einen versteifungselementfreien Fügebereichsabschnitt. Von Vorteil ist hierbei, dass dadurch eine gezielte längenänderungsbedingte Deformation an dem Fügebereichsabschnitt zugelassen werden kann. Der Fügebereichsabschnitt kann sich dann besonders widerstandsarm verformen, was zur Entlastung an den Verbindungsbereichen führt. Durch das Versteifungselement kann die Deformation also gezielt auf den Fügebereichsabschnitt begrenzt werden, wohingegen der Versteifungsabschnitt anhand des Versteifungselements vor der Deformation geschützt werden kann. Unter dem Ausdruck "versteifungselementfrei" kann verstanden werden, dass der Fügebereichsabschnitt von einer Versteifung durch das Versteifungselement ausgenommen sein kann. Anders ausgedrückt: der Fügebereichsabschnitt ist dann nicht mittels des Versteifungselements versteift und damit nicht mittels des Versteifungselements abgestützt.

In einer weiteren vorteilhaften Weiterbildung der Erfindung weist das Versteifungselement einen Verjüngungsbereich auf, an welchem sich das Versteifungselement in Richtung des versteifungselementfreien Fügebereichsabschnitts verjüngt. Dies ist von Vorteil, da durch die Verjüngung etwaige Steifigkeitssprünge entlang des Fügebereichs ausgeschlossen oder zumindest stark verringert werden können. Dies erhöht die Haltbarkeit bei der temperaturbedingten Längenänderung in besonderem Maße. Die Verjüngung kann derart ausgebildet sein, dass das Versteifungselement in Richtung des Fügebereichsabschnitts beispielsweise spitz zuläuft

In einer weiteren vorteilhaften Weiterbildung der Erfindung ist das Versteifungselement stoffschlüssig mit zumindest einer der mindestens zwei Trennwände verbunden. Dadurch kann eine besonders hohe Steifigkeit des Fügebereichs und eine zuverlässige Verbindung zwischen dem Versteifungselement und dem Fügebereich geschaffen werden. Eine besonders haltbare Verbindung lässt sich erzielen, wenn das Versteifungselement mit beiden Trennwänden stoffschlüssig verbunden, insbesondere verlötet ist.

Allgemein kann beispielsweise ein zwischen den Trennwänden ausgebildeter, sich entlang des Fügebereichs erstreckender Spalt eine gleichmäßige, einfach abzudichtende Spaltbreite aufweisen. Der Spalt kann beispielsweise mit einem Metalllot (z.B. Lötzinn) gefüllt und dadurch die Trennwände an dem Fügebereich miteinander gefügt sein.

In einer weiteren vorteilhaften Weiterbildung der Erfindung sind die mindestens zwei Trennwände an dem Verbindungsbereich T-Stoß-förmig mit der Gehäusewandung verbunden. Dies ist von Vorteil, da die T-Stoß-förmige Verbindung mit besonders geringem Fertigungsaufwand hergestellt werden kann. Unter der T-Stoß-förmigen Verbindung kann verstanden werden, dass die beiden Trennwände und die Gehäusewandung in einer Schnittebene, welche senkrecht zur Fluidhauptströmungsrichtung orientiert ist, an dem Verbindungsbereich miteinander eine T-Form bilden können.

Jede der Trennwände kann jeweils mindestens einen entlang der Gehäusewandung orientierten, vorzugsweise von dem Fügebereich weg orientierten Trennwandbereich aufweisen, an welchem die jeweilige Trennwand vorzugsweise stoffschlüssig mit der Gehäusewandung verbunden sein kann. Besonders bevorzugt können die Trennwände jeweils mindestens zwei einander gegenüberliegende Trennwandbereiche aufweisen, welche jeweils mit der Gehäusewandung verlötet sein können.

In einer weiteren vorteilhaften Weiterbildung der Erfindung ist das Versteifungselement an dem Verbindungsbereich stoffschlüssig mit zumindest einer der mindestens zwei Trennwände und/oder mit der Gehäusewandung verbunden. Dadurch lässt sich eine besonders hohe Steifigkeit an dem Verbindungsbereich erzielen. Durch das stoffschlüssige Verbinden der Trennwand, bevorzugt beider Trennwände, über das Versteifungselement an dem Verbindungsbereich kann eine unmittelbare Abstützung der Trennwand/Trennwände an dem Verbindungsbereich über das Versteifungselement erfolgen und damit dem Verbindungsbereich eine besonders hohe Steifigkeit verliehen werden. Durch das stoffschlüssige Verbinden des Versteifungselements mit der Gehäusewandung kann die Knickbelastung mittels des Versteifungselements zumindest teilweise an der Gehäusewandung abgestützt und dadurch der Verbindungsbereich entlastet werden. Eine besonders hohe Steifigkeit kann dementsprechend erzielt werden, wenn das Versteifungselement an dem Verbindungsbereich stoffschlüssig mit beiden Trennwänden und mit der Gehäusewandung verbunden ist.

Ein zweiter Aspekt der Erfindung betrifft eine Verbrennungskraftmaschine mit einem Wärmeübertrager gemäß dem ersten Aspekt der Erfindung. Bei der mit diesem Wärmeübertrager ausgestatteten Verbrennungskraftmaschine ist eine besonders ausfallsichere Wärmeübertragung zwischen den Fluiden ermöglicht.

In einer vorteilhaften Weiterbildung der Erfindung ist der Wärmeübertrager als Abgaskühler der Verbrennungskraftmaschine ausgebildet. Mit dem als Abgaskühler, insbesondere als AGR-Kühler, ausgebildeten Wärmeübertrager ist eine besonders ausfallsichere Wärmeübertragung zwischen Abgas, als erstes Fluid, und Kühlmittel, als zweites Fluid, ermöglicht.

Die in Bezug auf einen der Aspekte vorgestellten, bevorzugten Ausführungsformen und deren Vorteile gelten entsprechend für die jeweils anderen Aspekte der Erfindung und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1: eine perspektivische Schnittdarstellung eines ausschnittsweise gezeigten Wärmeübertragers einer Verbrennungskraftmaschine, welcher zum Übertragen von Wärme zwischen zwei Fluiden, von welchen ein erstes Fluid als Abgas und ein zweites Fluid als Kühlmittel der Verbrennungskraftmaschine ausgebildet ist, dient, wobei die stark abstrahierte dargestellte Verbrennungskraftmaschine einem ebenfalls stark abstrahiert dargestellten Kraftfahrzeug zugeordnet ist;
- Fig. 2: eine vergrößerte Darstellung eines Segments des in Fig. 1 gezeigten Wärmeübertragers; und
- Fig. 3: eine vergrößerte Darstellung eines in Fig. 2 gestrichelt umrandeten Bereichs A, welcher ein Versteifungselement in vergrößerter Perspektivansicht zeigt.

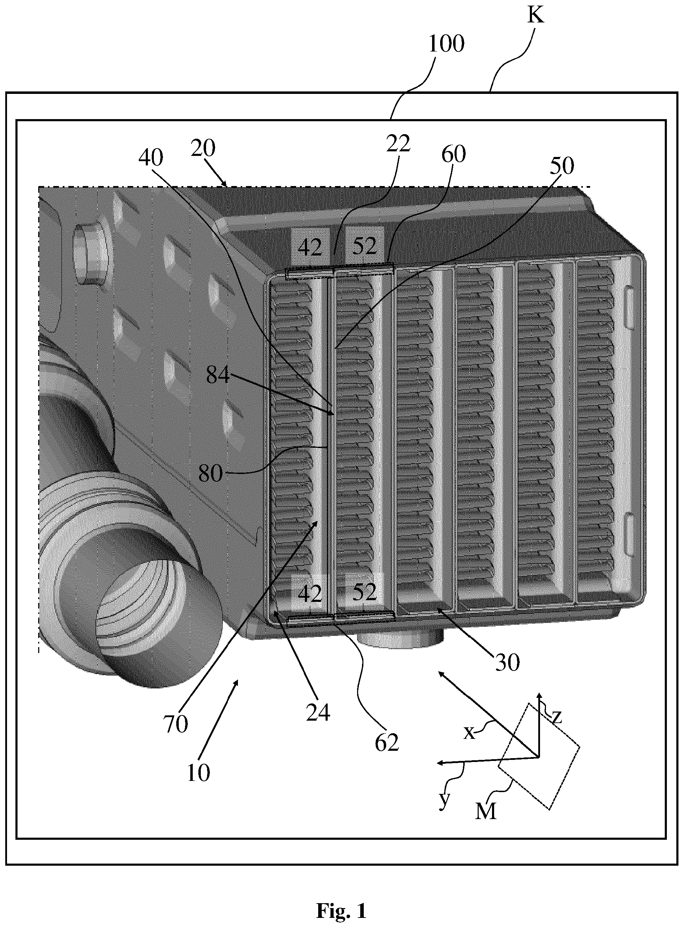

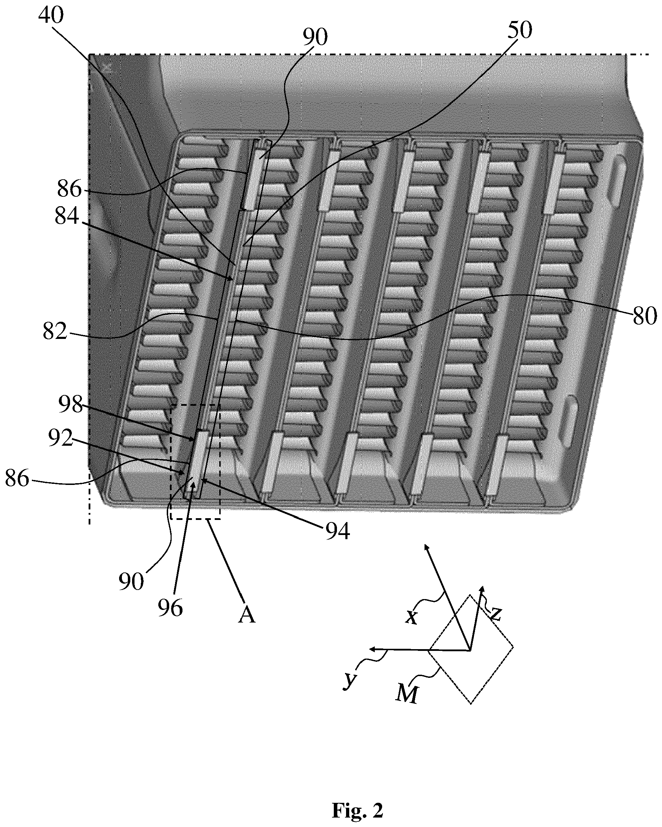

Fig. 1 zeigt eine schematische Darstellung eines Kraftfahrzeugs K, mit einer ebenfalls schematisch dargestellten Verbrennungskraftmaschine 100, welche zum Antreiben des Kraftfahrzeugs K ausgebildet ist. Die Verbrennungskraftmaschine 100 umfasst einen Wärmeübertrager 10, welcher als Abgaskühler, nämlich als AGR-Kühler der Verbrennungskraftmaschine 100 ausgebildet ist. Mittels des Wärmeübertragers 10 ist also eine sogenannte gekühlte Abgasrückführung beim Betrieb der Verbrennungskraftmaschine 100 möglich. Fig. 2 zeigt eine vergrößerte Darstellung eines Segments des in Fig. 1 gezeigten Wärmeübertragers.

Der Wärmeübertrager 10 dient zum Übertragen von Wärme zwischen zwei Fluiden. Ein erstes Fluid der zwei Fluide ist vorliegend als Abgas ausgebildet, wohingegen ein zweites Fluid der zwei Fluide vorliegend als Kühlmittel, beispielsweise in Form eines Wasser-Frostschutzmittel-Gemisches, ausgebildet ist.

Der Wärmeübertrager 10 (hier: AGR-Kühler) umfasst ein Gehäuse 20, mit wenigstens einer Gehäusewandung 22. Die Gehäusewandung 22 ist vorliegend als Blechteil ausgebildet und kann auch als Kühlmantelblech bezeichnet werden.

Die Gehäusewandung 22 begrenzt einen Gehäuseinnenraum 24 des Gehäuses umfangsseitig. Der Gehäuseinnenraum 24 weist einen Fluideintrittsbereich 30 zum Einleiten des ersten Fluides in den Gehäuseinnenraum 24 und einen Fluidaustrittsbereich zum Ausleiten des ersten Fluides aus dem Gehäuseinnenraum 24 auf. Der vorliegend nicht weiter gezeigte Fluidaustrittsbereich ist in einer Fluidhauptströmungsrichtung x des ersten Fluides stromab des Fluideintrittsbereichs angeordnet. Die Fluidhauptströmungsrichtung x entspricht einer Längserstreckungsrichtung des Wärmeübertragers 10. Mit andern Worten erfolgt also beim bestimmungsgemäßen Gebrauch des Wärmeübertragers 10 eine Durchströmung des Gehäuseinnenraums 24 mit dem ersten Fluid in Längserstreckungsrichtung des Wärmeübertragers 10.

Wie ebenfalls anhand von Fig. 1 und Fig. 2 erkennbar ist, ist der Wärmeübertrager vorliegend als Platten-Wärmeübertrager ausgebildet.

Die Platten des Wärmeübertragers 10 werden dabei durch paarweise miteinander verbundene Trennwände 40, 50, nämlich eine erste Trennwand 40 und eine zweite Trennwand 50, welche vorliegend als jeweilige Blechhalbschalen ausgebildet sind, gebildet. Eine Platte ist somit durch die erste Trennwand 40 und die zweite Trennwand 50 gebildet, wobei der Wärmeübertrager 10 eine Mehrzahl an derartigen Platten aufweist, wie anhand von Fig. 1 zu erkennen ist. Im Folgenden wird lediglich auf eine einzige Platte, die durch die beiden Trennwände 40, 50 gebildet ist, eingegangen, die nachfolgenden Ausführung gelten jedoch prinzipiell auch für die übrigen Platten des Wärmeübertragers 10.

Die Trennwände 40, 50 sind in dem Gehäuseinnenraum 24 aufgenommen und an einander in einer Hochrichtung z des Wärmeübertragers 10 gegenüberliegenden Verbindungsbereichen 60, 62 mit der Gehäusewandung 22 verbunden. Dabei weist die erste Trennwand 40 jeweilige, einander in der Hochrichtung z gegenüberliegende Trennwandbereiche 42 auf, wohingegen die zweite Trennwand 50 einander in der Hochrichtung z gegenüberliegende Trennwandbereiche 52 aufweist. Die jeweiligen Trennwandbereiche 42, 52 sind an die Gehäusewandung 22 angeformt. Mit anderen Worten verlaufen die Trennwandbereiche 42, 52 an den entsprechenden Verbindungsbereichen 60, 62 zumindest überwiegend parallel zu der Gehäusewandung 22 und vorliegend auch zueinander und sind an den Verbindungsbereichen 60, 62 stoffschlüssig, insbesondere durch eine Lötverbindung, mit der Gehäusewandung 22 verbunden.

Die Trennwände 40, 50 dienen zur Trennung der Fluide voneinander und begrenzen einen beim bestimmungsgemäßen Gebrauch des Wärmeübertragers 10 mittels des zweiten Fluides (hier: Kühlmittel) durchströmten Fluidaufnahmeraum 70 zumindest bereichsweise. Der Fluidaufnahmeraum 70 wird auch mittels der Gehäusewandung 22 bereichsweise, nämlich in der senkrecht zur Fluidhauptströmungsrichtung x orientierten Hochrichtung z des Wärmeübertragers 10, begrenzt. Der Fluidaufnahmeraum 70 ist in sämtlichen Fig. 1 bis Fig. 3 durch die Trennwände 40, 50 verdeckt und damit nicht einsehbar, es ist jedoch ohne weiteres klar, wie die als jeweilige Blechhalbschalen ausgebildeten Trennwände 40, 50 den Fluidaufnahmeraum 70 begrenzen können. So kann jeweils eine der Blechhalbschalen (Trennwände 40, 50) etwa eine Raumhälfte des Fluidaufnahmeraums 70 begrenzen.

Die Paare von Trennwänden 40, 50 sind jeweils zumindest an einem, dem Fluideintrittsbereich 30 zugeordneten und in der Fluidhauptströmungsrichtung x des ersten Fluides an den Fluidaufnahmeraum 70 angrenzenden Fügebereich 80 miteinander stoffschlüssig verbunden und dabei verlötet. Ein sich über den Fügebereich 80 erstreckender Spalt 84 zwischen den Trennwänden 40, 50 ist dabei mit Metalllot gefüllt, wodurch die Trennwände 40, 50 miteinander verlötet und der Spalt 84 gegenüber einem unerwünschten Austreten des zweiten Fluides (Kühlmittel, insbesondere Kühlwasser) aus dem sich zwischen den Trennwänden 40, 50 erstreckenden Fluidaufnahmeraum 70 abgedichtet ist. Zusätzlich sind die Trennwände 40, 50 auch an einem, dem Fügebereich 80 in Fluidhauptströmungsrichtung x gegenüberliegenden, und dem Fluidaustrittsbereich zugeordneten weiteren Fügebereich miteinander verbunden, was jedoch in sämtlichen Fig. 1 bis Fig. 3 nicht erkennbar ist, zumal der Fluidaustrittsbereich nicht gezeigt ist.

An dem gemeinsamen Fügebereich 80 sind die jeweiligen Trennwände 40, 50 jeweils in einem Winkel, nämlich vorliegend einem rechten Winkel (90°-Winkel), zu den jeweiligen Trennwandbereichen 42, 52 orientiert. Die Trennwände 40, 50 sind dadurch an den Verbindungsbereichen 60, 62 T-Stoß-förmig mit der Gehäusewandung 22 verbunden, wie besonders deutlich in Fig. 2 erkennbar ist.

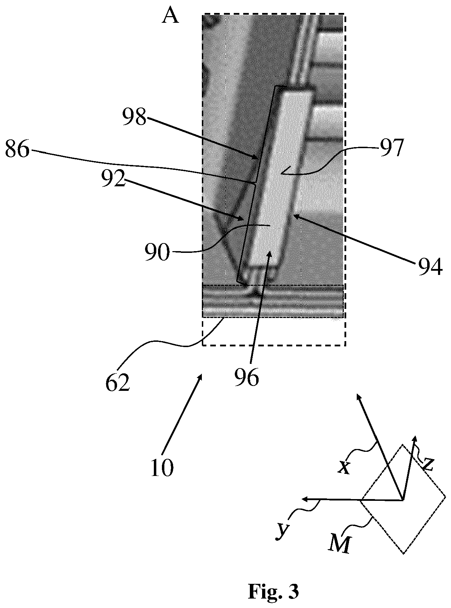

Anhand von Fig. 2 und Fig. 3 ist erkennbar, dass der Wärmeübertrager 10 eine Mehrzahl an Versteifungselementen 90 umfasst, welche zur zumindest bereichsweisen Versteifung von an die Verbindungsbereiche 60, 62 angrenzenden Versteifungsabschnitten 86 des Fügebereichs 80 an dem Fügebereich 80 angeordnet sind. Die Versteifungselemente 90 sind dazu ausgebildet, die jeweiligen Versteifungsabschnitte 86 bei einer temperaturbedingten Längenänderung des Fügebereichs 80 zumindest gegenüber einer längenänderungsbedingten Knickbelastung abzustützen. Durch das Abstützen der Knickbelastung kann insbesondere ein seitliches Ausknicken in Form einer beulenartigen oder wellenförmigen Verformung im Bereich der Versteifungsabschnitte 86 verhindert werden. Auf eine Darstellung der Versteifungselement 90 wurde in Fig. 1 lediglich aus Gründen der Übersichtlichkeit verzichtet.

Vorliegend sind je Fügebereich 80 und damit je Platte (welche die Trennwände 40, 50 umfasst) zwei Versteifungselemente 90 an einander in Hochrichtung z gegenüberliegenden Versteifungsabschnitten 86 angeordnet. Einer der Versteifungsabschnitte 86 ist dem Verbindungsbereich 60 und ein anderer der Versteifungsabschnitte 86 ist dem zweiten Verbindungsbereich 62 zugeordnet. Somit befindet sich also eines der Versteifungselemente 90 an dem Verbindungsbereich 60 und eines der Versteifungselemente 90 (im vorliegenden Beispiel in Hochrichtung z gegenüberliegend) an dem Verbindungsbereich 62.

Die Versteifungselemente 90 umgreifen die Trennwände 40, 50 an dem jeweiligen Versteifungsabschnitt 86 bereichsweise, wodurch an beiden Trennwänden 40, 50 eine wirksame Versteifung erzielt werden kann.

Darüber hinaus klemmen die Versteifungselemente 90 die Trennwände 40, 50 an dem Versteifungsabschnitt 86 ein. Mit anderen Worten üben die Versteifungselemente 90 also jeweils eine Klemmkraft auf die Trennwände 40, 50 aus.

Anhand von Fig. 2 ist zu erkennen, dass der Fügebereich 80 einen versteifungselementfreien Fügebereichsabschnitt 82 umfasst. Der Fügebereichsabschnitt 82 erstreckt sich zwischen den einander gegenüberliegenden Versteifungsabschnitten 86. Kommt es beim bestimmungsgemäßen Gebrauch des Wärmeübertragers 10 zu einer temperaturbedingten Längenänderung des Fügebereichs 80, so kann durch die versteifungselementfreie Ausgestaltung des Fügebereichsabschnitts 82 eine etwaige längenänderungsbedingte Verformung, beispielsweise in Form eines wellenartigen Ausknickens lokal und damit gezielt auf diesen Fügebereichsabschnitt 82 begrenzt gehalten werden, wohingegen das Ausknicken sowie eine damit verbundene mechanische Spannungsbelastung im Bereich der Versteifungsabschnitte 86 und an den Verbindungsbereichen 60, 62 mittels der Versteifungselemente 90 verhindert werden kann.

Die Versteifungselemente 90 weisen jeweils einen Verjüngungsbereich 98 auf, an welchem sich die jeweiligen Versteifungselemente 90 in Richtung des versteifungselementfreien Fügebereichsabschnitts 82 verjüngen. Anhand von Fig. 3 ist zu erkennen, dass die Versteifungselemente 90 aufgrund deren Verjüngung in Richtung des Fügebereichsabschnitts 82 spitz zulaufen. Der Verjüngungsbereich 98 kann sich vorzugsweise über eine gesamte Länge der Versteifungselemente 90 erstrecken, was anhand von Fig. 3 erkennbar ist, in welcher sich der Verjüngungsbereich 98 in Hochrichtung z über die gesamte Länge der Versteifungselemente 90 erstreckt.

Die Versteifungselemente 90 sind vorliegend zumindest bereichsweise hohlquaderförmig ausgestaltet. Dabei weist jedes der Versteifungselemente 90 zwei einander in einer von der Fluidhauptströmungsrichtung x verschiedenen Richtung y gegenüberliegende Seitenwandbereiche 92, 94 auf. Von diesen Seitenwandbereichen 92, 94 stützt ein erster Seitenwandbereich 92 die erste Trennwand 40 entlang des Versteifungsabschnitts 86 und vorzugsweise auch an einem der Verbindungsbereiche 60, 62 ab. Ein dem ersten Seitenwandbereich 92 in Richtung y gegenüberliegender, zweiter Seitenwandbereich 94 der Seitenwandbereiche 92, 94 stützt die zweite Trennwand 50 entlang des Versteifungsabschnitts 86 und vorzugsweise auch an einem der Verbindungsbereiche 60, 62 ab, wie anhand von Fig. 3 erkennbar ist. Die Seitenwandbereiche 92, 94 sind einteilig über einen Stirnwandbereich 96 des jeweiligen Versteifungselements 90 miteinander verbunden. Der Stirnwandbereich 96 weist eine der Fluidhauptströmungsrichtung x zugewandte Stirnfläche 97 (siehe Fig. 3) auf. Die Richtung y entspricht vorliegend einer Querrichtung des Wärmeübertragers 10.

Die Richtung y ist senkrecht zu einer Mittelebene M, zu welcher die Trennwände 40, 50 zumindest im Wesentlichen parallel orientiert sein können, ausgerichtet. Die Mittelebene M ist vorliegend durch die Fluidhauptströmungsrichtung x und die Hochrichtung z aufgespannt. Die Fluidhauptströmungsrichtung x (Längserstreckungsrichtung des Wärmeübertragers 10), die Richtung y (Querrichtung des Wärmeübertragers 10) und die Hochrichtung z sind jeweils senkrecht zueinander orientiert.

Die Versteifungselemente 90 sind jeweils stoffschlüssig mit den Trennwänden 40, 50 verbunden, insbesondere verlötet.

Die jeweiligen Versteifungselemente 90 sind an den jeweiligen Verbindungsbereichen 60, 62 stoffschlüssig mit den Trennwände 40, 50 sowie zumindest mittelbar mit der Gehäusewandung 22 verbunden. Unter der zumindest mittelbaren Verbindung ist dabei zu verstehen, dass die Versteifungselemente 90 stoffschlüssig an den Trennwandbereichen 42, 52 mit den Trennwänden 40, 50 verbunden sein können, wobei die Trennwandbereiche 42, 52 wiederum stoffschlüssig mit der Gehäusewandung 22 verbunden sind.

Die Versteifungselemente 90 sind jeweils dazu vorgesehen und ausgebildet, ein etwaiges Ausknicken, beispielsweise in Form einer Wellenbildung bzw. Ausbeulung, infolge längenänderungsbedingter, mechanischer Spannungen an den Verbindungsbereichen 60, 62 infolge einer temperaturbedingten Längenänderung des Fügebereichs 80 zu verhindern. Durch die Versteifungselemente 90 ist damit eine besonders ausfallsichere Wärmeübertragung zwischen den Fluiden ermöglicht.

Die Trennwände 40, 50 sind entlang des gesamten Fügebereichs 80 stoffschlüssig miteinander verbunden, nämlich verlötet.

Die Trennwände 40, 50 (Blechhalbschalen) können bei der Herstellung des vorliegenden Wärmeübertragers 10 einerseits an dem Fügebereich 80 miteinander und andererseits an den Verbindungsbereichen 60, 62 mit der Gehäusewandung 22 gefügt werden. Aufgrund von Mindestlötbreiten im Design des Wärmeübertragers 10 stellen die Verbindungsbereiche 60, 62 besonders steife Zonen des Wärmeübertragers 10 insbesondere am Fluideintrittsbereich 30 dar.

Durch die Versteifungselemente 90 kann eine unzulässig hohe mechanische Belastung, beispielsweise in Form einer Temperatur-Wechselbelastung, an den Verbindungsbereichen 60, 62 vermieden werden. Die Versteifungselemente 90 verhindern, dass die T-Stoß-förmig mit der Gehäusewandung 22 verbundenen Trennwände 40, 50 an den Versteifungsabschnitten 86 ausknicken, wodurch übermäßige Belastungen der Verbindungsbereiche 60, 62 selbst bei hoch transienter Durchströmung des Gehäuseinnenraums 24 mit besonders heißem Abgas (erstes Fluid) vermieden werden können. Die Versteifungselemente 90 können insgesamt eine gezielte lokale Versteifung bilden, an welcher das Ausknicken auch bei der temperaturbedingten Längenänderung unterbleibt.

Durch die geometrische Formgebung der Versteifungselemente 90 erfolgt eine gezielte lokale Erhöhung der Steifigkeit der Blechhalbschalen (Trennwände 40, 50) im Fügebereich 80. Durch die Versteifungselemente 90 werden also die verlöteten Blechhalbschalen lokal begrenzt versteift, wodurch es bei Temperatur-Wechselbelastung zu einer geringeren Verformung an den Versteifungsabschnitten 86 kommt. Die Versteifungsabschnitte 86 stellen jeweilige, an die Verbindungsbereiche 60, 62 angrenzende Randbereiche des Fügebereichs 80 dar. Die Verbindungsbereiche 60, 62 werden insgesamt bei Temperatur-Wechselbelastung entlastet.

Bei dem vorliegenden Wärmeübertrager 10 tragen die Versteifungselemente 90 dazu bei, dass etwaige durch die temperaturbedingte Längenänderung bedingte Spannungsrisse im Bereich der Verbindungsbereiche 60, 62 vermieden werden. Darüber hinaus werden durch die Versteifungselemente 90 etwaige Steifigkeitssprünge in der T-Stoß-förmigen Verbindung erheblich reduziert und ein etwaiger Rissfortschrittspfad verlängert.

Die Versteifungselemente 90 können allgemein zur Montageerleichterung auch als Versteifungsclipse ausgebildet sein. Die Versteifungsclipse können dann beispielsweise an dem Versteifungsabschnitt 86 mit zumindest einer der Trennwände 40, 50 oder beiden Trennwänden 40, 50 verrastet sein.

Die Versteifungselemente 90 können bei der Herstellung des Wärmeübertragers 10 mit dem Fügebereich 80 verbunden, vorzugsweise verlötet, werden.

### Bezugszeichenliste

- 10: Wärmeübertrager
- 20: Gehäuse
- 22: Gehäusewandung
- 24: Gehäuseinnenraum
- 30: Fluideintrittsbereich
- 40: erste Trennwand
- 42: Trennwandbereich
- 50: zweite Trennwand
- 52: Trennwandbereich
- 60: Verbindungsbereich
- 62: zweiter Verbindungsbereich
- 70: Fluidaufnahmeraum
- 80: Fügebereich
- 82: Fügebereichsabschnitt
- 84: Spalt
- 86: Versteifungsabschnitt
- 90: Versteifungselement
- 92: Seitenwandbereich
- 94: zweiter Seitenwandbereich
- 96: Stirnwandbereich
- 97: Stirnfläche
- 98: Verjüngungsbereich
- 100: Verbrennungskraftmaschine
- K: Kraftfahrzeug
- M: Mittelebene
- x: Fluidhauptströmungsrichtung
- y: Richtung
- z: Hochrichtung

## Patentansprüche

1. Wärmeübertrager (10) für eine Verbrennungskraftmaschine (100), zum Übertragen von Wärme zwischen zumindest zwei Fluiden,
- mit wenigstens einem Gehäuse (20), welches zumindest eine Gehäusewandung (22) und einen zumindest bereichsweise mittels der Gehäusewandung (22) begrenzten Gehäuseinnenraum (24) aufweist, welcher einen Fluideintrittsbereich (30) zum Einleiten eines ersten Fluides der zumindest zwei Fluide in den Gehäuseinnenraum (24) und einen Fluidaustrittsbereich zum Ausleiten des ersten Fluides aus dem Gehäuseinnenraum (24) aufweist,
- mit mindestens zwei Trennwänden (40, 50), welche zumindest überwiegend in dem Gehäuseinnenraum (24) aufgenommen und an zumindest einem Verbindungsbereich (60) mit der Gehäusewandung (22) des Gehäuses (20) verbunden sind, und welche zur Trennung der Fluide voneinander einen mittels eines zweiten Fluids der wenigstens zwei Fluide durchströmbaren Fluidaufnahmeraum (70) zumindest bereichsweise begrenzen, wobei die mindestens zwei Trennwände (40, 50) zumindest an einem, dem Fluideintrittsbereich (30) zugeordneten und in einer Fluidhauptströmungsrichtung (x) des ersten Fluides an den Fluidaufnahmeraum (70) angrenzenden Fügebereich (80) miteinander verbunden sind,
wobei der Wärmeübertrager (10) wenigstens ein Versteifungselement (90) umfasst, welches zur zumindest bereichsweisen Versteifung zumindest eines an den Verbindungsbereich (60) angrenzenden Versteifungsabschnitts (86) des Fügebereichs (80) an dem Fügebereich (80) angeordnet und dazu ausgebildet ist, den Versteifungsabschnitt (86) bei einer temperaturbedingten Längenänderung des Fügebereichs (80) zumindest gegenüber einer längenänderungsbedingten Knickbelastung abzustützen,
**dadurch gekennzeichnet, dass**
das Versteifungselement (90) die mindestens zwei Trennwände (40, 50) an dem Versteifungsabschnitt (86) zumindest bereichsweise umgreift.

2. Wärmeübertrager (10) nach Anspruch 1,
**dadurch gekennzeichnet, dass**
das Versteifungselement (90) die mindestens zwei Trennwände (40, 50) an dem Versteifungsabschnitt (86) einklemmt.

3. Wärmeübertrager (10) nach einem der vorhergehenden Ansprüche,
**dadurch gekennzeichnet, dass**
der Fügebereich (80) einen versteifungselementfreien Fügebereichsabschnitt (82) umfasst.

4. Wärmeübertrager (10) nach Anspruch 3,
**dadurch gekennzeichnet, dass**
das Versteifungselement (90) einen Verjüngungsbereich (98) aufweist, an welchem sich das Versteifungselement (90) in Richtung des versteifungselementfreien Fügebereichsabschnitts (82) verjüngt.

5. Wärmeübertrager (10) nach einem der vorhergehenden Ansprüche,
**dadurch gekennzeichnet, dass**
das Versteifungselement (90) stoffschlüssig mit zumindest einer der mindestens zwei Trennwände (40, 50) verbunden ist.

6. Wärmeübertrager (10) nach einem der vorhergehenden Ansprüche,
**dadurch gekennzeichnet, dass**
die mindestens zwei Trennwände (40, 50) an dem Verbindungsbereich (60) T-Stoß-förmig mit der Gehäusewandung (22) verbunden sind.

7. Wärmeübertrager (10) nach einem der vorhergehenden Ansprüche,
**dadurch gekennzeichnet, dass**
das Versteifungselement (90) an dem Verbindungsbereich (60) stoffschlüssig mit zumindest einer der mindestens zwei Trennwände (40, 50) und/oder mit der Gehäusewandung (22) verbunden ist.

8. Verbrennungskraftmaschine (100) mit einem Wärmeübertrager (10) nach einem der Ansprüche 1 bis 7.

9. Verbrennungskraftmaschine (100) nach Anspruch 8,
**dadurch gekennzeichnet, dass**
der Wärmeübertrager (10) als Abgaskühler der Verbrennungskraftmaschine (100) ausgebildet ist.

## Claims

1. Heat exchanger (10) for an internal combustion engine (100), for transferring heat between at least two fluids,
- with at least one housing (20) having at least one housing wall (22) and a housing interior (24) which is delimited at least in regions by the housing wall (22), and which has a fluid inlet region (30) for introduction of a first fluid of the at least two fluids into the housing interior (24) and a fluid outlet region for discharge of the first fluid from the housing interior (24),
- with at least two partitions (40, 50) which are at least predominantly accommodated in the housing interior (24) and which are connected to the housing wall (22) of the housing (20) in at least one connecting region (60), and which, in order to separate the fluids from one another, at least in regions delimit a fluid-receiving space (70) through which a second fluid of the at least two fluids can flow, wherein the at least two partitions (40, 50) are connected to one another at least at a joining region (80) which is assigned to the fluid inlet region (30) and adjoins the fluid-receiving space (70) in a main fluid flow direction (x) of the first fluid,
wherein the heat exchanger (10) comprises at least one stiffening element (90) which, in order to stiffen at least in regions at least one stiffening portion (86) of the joining region (80) adjoining the connecting region (60), is arranged at the joining region (80) and is designed to brace the stiffening portion (86) at least against a buckling load induced by length change on a temperature-related length change of the joining region (80), **characterized in that** the stiffening element (90) at least in regions surrounds the at least two partitions (40, 50) at the stiffening portion (86).

2. Heat exchanger (10) according to Claim 1, **characterized in that** the stiffening element (90) clamps the at least two partitions (40, 50) at the stiffening portion (86).

3. Heat exchanger (10) according to any of the preceding claims, **characterized in that** the joining region (80) comprises a joining region portion (82) without stiffening element.

4. Heat exchanger (10) according to Claim 3, **characterized in that** the stiffening element (90) has a tapering region (98) at which the stiffening element (90) tapers in the direction of the joining region portion (82) without stiffening element.

5. Heat exchanger (10) according to any of the preceding claims, **characterized in that** the stiffening element (90) is connected by substance bonding to at least one of the at least two partitions (40, 50).

6. Heat exchanger (10) according to any of the preceding claims, **characterized in that** the at least two partitions (40, 50) are connected to the housing wall (22) at the connecting region (60) in a T-shaped butt joint.

7. Heat exchanger (10) according to any of the preceding claims, **characterized in that** the stiffening element (90) is connected by substance bonding to at least one of the at least two partitions (40, 50) and/or to the housing wall (22) at the connecting region (60).

8. Internal combustion engine (100) with a heat exchanger (10) according to any of Claims 1 to 7.

9. Internal combustion engine (100) according to Claim 8, **characterized in that** the heat exchanger (10) is configured as an exhaust gas cooler of the internal combustion engine (100).

## Revendications

1. Échangeur de chaleur (10) pour un moteur à combustion interne (100), pour la transmission de chaleur entre au moins deux fluides,
- avec au moins un boîtier (20) qui présente au moins une paroi de boîtier (22) et un espace intérieur de boîtier (24) délimité au moins par zones au moyen de la paroi de boîtier (22), lequel présente une zone d'entrée de fluide (30) pour l'introduction d'un premier fluide des au moins deux fluides dans l'espace intérieur de boîtier (24) et une zone de sortie de fluide pour l'évacuation du premier fluide de l'espace intérieur de boîtier (24),
- avec au moins deux parois de séparation (40, 50) qui sont logées au moins en majeure partie dans l'espace intérieur de boîtier (24) et sont reliées à la paroi de boîtier (22) du boîtier (20) au niveau d'au moins une zone de liaison (60), et qui, pour séparer les fluides les uns des autres, délimitent au moins par zones un espace de réception de fluide (70) pouvant être traversé par un deuxième fluide des au moins deux fluides, les au moins deux parois de séparation (40, 50) étant reliées entre elles au moins au niveau d'une zone de jonction (80) associée à la zone d'entrée de fluide (30) et adjacente à l'espace de réception de fluide (70) dans une direction d'écoulement principal de fluide (x) du premier fluide,
l'échangeur de chaleur (10) comprenant au moins un élément de renforcement (90) qui est agencé au niveau de la zone de jonction (80) pour rigidifier au moins par zones au moins une section de renforcement (86) de la zone de jonction (80) adjacente à la zone de liaison (60) et qui est réalisé pour soutenir la section de renforcement (86) lors d'une modification de longueur de la zone de jonction (80) due à la température, au moins par rapport à une charge de flexion due à la modification de longueur,
**caractérisé en ce que**
l'élément de renforcement (90) entoure au moins par zones les au moins deux parois de séparation (40, 50) au niveau de la section de renforcement (86).

2. Échangeur de chaleur (10) selon la revendication 1, **caractérisé en ce que** l'élément de renforcement (90) serre les au moins deux parois de séparation (40, 50) au niveau de la section de renforcement (86).

3. Échangeur de chaleur (10) selon l'une quelconque des revendications précédentes, **caractérisé en ce que** la zone de jonction (80) comprend une section de zone de jonction (82) dépourvue d'élément de renforcement.

4. Échangeur de chaleur (10) selon la revendication 3, **caractérisé en ce que** l'élément de renforcement (90) présente une zone de rétrécissement (98) au niveau de laquelle l'élément de renforcement (90) se rétrécit en direction de la section de zone de jonction (82) dépourvue d'élément de renforcement.

5. Échangeur de chaleur (10) selon l'une quelconque des revendications précédentes, **caractérisé en ce que** l'élément de renforcement (90) est relié par liaison de matière à au moins l'une des au moins deux parois de séparation (40, 50).

6. Échangeur de chaleur (10) selon l'une quelconque des revendications précédentes, **caractérisé en ce que** les au moins deux parois de séparation (40, 50) sont reliées à la paroi de boîtier (22) au niveau de la zone de liaison (60) en forme de T.

7. Échangeur de chaleur (10) selon l'une quelconque des revendications précédentes, **caractérisé en ce que** l'élément de renforcement (90) est relié à la zone de liaison (60) par liaison de matière avec au moins l'une des au moins deux parois de séparation (40, 50) et/ou avec la paroi de boîtier (22).

8. Moteur à combustion interne (100) avec un échangeur de chaleur (10) selon l'une quelconque des revendications 1 à 7.

9. Moteur à combustion interne (100) selon la revendication 8, **caractérisé en ce que** l'échangeur de chaleur (10) est réalisé sous forme de refroidisseur de gaz d'échappement du moteur à combustion interne (100).
